# EUROPÄISCHE PATENTSCHRIFT

(11) **EP 0 771 839 B1**
(45) Veröffentlichungstag und Bekanntmachung des Hinweises auf die Patenterteilung: **21.03.2001**
(21) Anmeldenummer: 96117538.7
(22) Anmeldetag: 31.10.1996
(51) Int. Cl.: C08K 5/00, C08G 18/79, C08G 18/28, C08G 18/38, C08G 18/08

(54) **Verfahren zur Herstellung von Pigmenten**
Process for the preparation of pigments
Procédé pour préparation des pigments

(30) Priorität: 03.11.1995 DE 19541054
(43) Veröffentlichungstag der Anmeldung: 07.05.1997
(73) Patentinhaber: Giesecke & Devrient GmbH, 81677 München (DE)
(72) Erfinder: Schwenk, Gerhard, Dr., 82178 Puchheim (DE); Magg, Ulrich, Dr., 85232 Feldgeding (DE); Scholz, Ulrich, Dr., 80335 München (DE); Leist, Johannes, 81477 München (DE)
(74) Vertreter: Klunker . Schmitt-Nilson . Hirsch

(56) Entgegenhaltungen:
- EP-A- 0 160 913
- EP-A- 0 292 702
- DE-A- 2 063 948
- GB-A- 1 174 308
- Kunststoff-Lexikon, 8.Ausgabe, 1992, S.290,291, Hanser-Verlag
- Encyclopedia of Polymer Science and Technology, Supplement, 1989, S.68, John Wiley

## Beschreibung

Die Erfindung betrifft ein Verfahren zur Herstellung einer Pigmentzusammensetzung mit einem Farbstoff und einem festen Harz, wobei der Farbstoff in dem festen Harz gebunden ist.

Zur Herstellung von Druck- oder anderen Farben ist es oftmals nötig, die verwendeten Farbstoffe zunächst in eine feste Harzschicht einzubetten und somit im Harz zu fixieren. Dies erhöht die Farbechtheit des verwendeten Farbstoffs. Die farbstoffhaltigen Harze können anschließend zu Pigmenten fein vermahlen und zur Herstellung von Farben den jeweiligen Bindemitteln zugegeben werden, so daß die gewünschten Druckfarben entstehen.

Ein derartiges Pigment ist beispielsweise aus der DE-OS 20 63 948 bekannt. In dieser Schrift wird die Herstellung eines fluoreszierenden Pigmentes beschrieben, wobei ein fluoreszierender Farbstoff in ein Harz eingemischt wird. Als Harze werden dabei solche verwendet, die durch Polyaddition eines niedermolekularen Polyols mit einem monomeren aliphatischen und/oder monomeren zykloaliphatischen Diisocyanat und gegebenenfalls weiteren Komponenten hergestellt werden. Zur Herstellung des Pigmentes werden der Fluoreszenzfarbstoff sowie die übrigen Komponenten, das Polyol und das Diisocyanat vermischt und unter exothermen Reaktionablauf vernetzt.

Die Verwendung derartiger Harze hat jedoch den Nachteil, daß bei der Verarbeitung die als Ausgangsstoffe verwendeten Diisocyanate erhebliche gesundheitliche Risiken in sich tragen und dementsprechend hohe Sicherheitsanforderungen einzuhalten sind. So sind diese Stoffe beispielsweise beim Einatmen giftig.

Die Aufgabe der Erfindung besteht unter anderem demgemäß darin, ein Verfahren zur Herstellung eines Pigments vorzuschlagen, bei dem der Herstellungsprozeß aus sicherheitstechnischer und arbeitsmedizinischer Sicht unbedenklich ist, das im kontinuierlichen Fertigungsverfahren herstellbar ist und verbesserte Qualitätseigenschaften aufweist.

Erfindungsgemäß wird diese Aufgabe durch die in den unabhängigen Ansprüchen genannten Merkmale gelöst.

Der Grundgedanke der Erfindung besteht darin, bei der Herstellung des Pigmentes einen Farbstoff in ein Harz einzubinden, wobei das Harz aus dem Umsatz fester, oligomerisierter Diisocyanate und einer pulverförmigen, mehrfunktionellen Verbindung mit aktivem Wasserstoff hergestellt wird. Beim erfindungsgemäßen Verfahren wird dabei ein Extruder verwendet, welcher den Durchlauf des Gemenges aus den obengenannten Ausgangsstoffen erlaubt. Mit der Verwendung oligomerisierter Polyisocyanate an Stelle der bislang verwendeten monomeren Diisocyanate werden eine Reihe von Vorteilen erreicht. So ist beispielsweise eine sicherheitstechnisch und arbeitsmedizinisch unbedenkliche Prozeßführung möglich, da von diesem Ausgangsstoff bislang keine besonderen Gefahren bekannt sind. Sofern die Reaktionsführung in kontinuierlicher Prozeßführung durchgeführt wird, ergibt sich die Möglichkeit, in den Prozeß durch Variation der Prozeßparameter, wie Prozeßzeit, Mischgeschwindigkeit oder ähnliches, einzugreifen. Der Polymerisationsgrad der Reaktionsmischung und damit die Härte des hergestellten Harzes läßt sich somit steuern, wobei über das zusätzliche Vorsehen von Heizzonen an der Prozeßeinheit ein Temperaturprofil eingestellt werden kann, mit dessen Hilfe sich die Reaktion weiterhin optimal auf das gewünschte Endprodukt einstellen läßt.

In einer bevorzugten Ausführungsform wird das Pigment durch das Einbinden eines Farbstoffes in ein Harz hergestellt, wobei als oligomerisiertes Polyisocyanat ein trimerisiertes Diisocyanat, vorzugsweise ein Derivat des Isophorondiisocyanates verwendet wird. Dieses trimerisierte Diisocyanat wird mit einem Di- oder Polyamin vermischt und zusammen mit dem Farbstoff einem Schneckenextruder zugeführt. Im Schneckenextruder durchläuft das Gemisch ein Temperaturprofil, welches durch das Vorsehen unterschiedlicher Heizzonen im Extruder verwirklicht wird. Nach der Reaktionszeit tritt am Ende des Extruders ein zähes Produkt aus, das anschließend in einer Zerkleinerungseinheit auf die erforderliche Pigmentgröße zerkleinert wird.

Die Eigenschaften des Endproduktes lassen sich über die Prozeßparameter am Extruder beeinflussen. Es besteht darüber hinaus noch die Möglichkeit, dem Gemisch einen sogenannten Kettenstopper zuzuführen, der bevorzugt in einer monofunktionellen Verbindung mit aktivem Wasserstoff besteht und vorzugsweise aus der Gruppe der Amine oder Amide gewählt wird.

Weitere Vorteile und vorteilhafte Ausführungsformen sind der Beschreibung der nachfolgenden Figuren zu entnehmen, bei deren Darstellung bewußt auf eine maßstabsgetreue Ausgestaltung verzichtet wurde, um das Verständnis zu erleichtern.

Es zeigt im einzelnen:

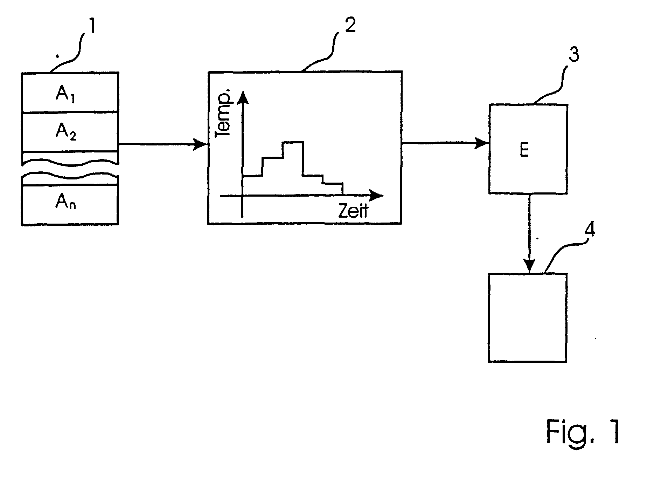

- Fig. 1: eine schematisierte Darstellung des Reaktionsablaufes beim erfindungsgemäßen Herstellungsverfahren,

In Fig. 1 ist der Reaktionsablauf des erfindungsgemäßen Verfahrens schematisch beschrieben. Die für die Herstellung des Pigmentes erforderlichen Ausgangsstoffe A₁ bis An werden in der Einheit 1 zusammengeführt und gegebenenfalls bereits vermischt. Bei den Ausgangsstoffen handelt es sich dabei um zumindest ein pulverförmiges oligomerisiertes Polyisocyanat, einen Farbstoff und eine pulverförmige mehrfunktionelle Verbindung mit aktivem Wasserstoff. Das oligomerisierte Polyisocyanat ist dabei vorzugsweise ein trimerisiertes Diisocyanat, insbesondere ein Derivat des Isophorondiisocyanates.

Die mehrfunktionelle Verbindung mit aktivem Wasserstoff wird üblicherweise aus der Gruppe der Amine, Amide, Alkohole und Carbon-, Sulfon-sowie Phosphonsäuren ausgewählt. Vorzugweise kommen dabei Harnstoff, Melamin, Sulfamid, Sulfanilamid, Aminobenzamid und ihre Derivate zum Einsatz. Diese Ausgangsstoffe werden zu einem Gemenge in einem Hochleistungsmischer homogen vermischt und einem Extruder 2, insbesondere einem Schneckenextruder, zugeführt. In dem Extruder 2 wird das Gemenge weiter vermischt und durchläuft hier ein Temperaturprofil, welches den Umsetzungsprozeß des oligomerisierten Polyisocyanates mit den mehrfunktionellen Verbindungen zu dem gewünschten festen Harz startet, wobei am Ende dieses Prozesses der Farbstoff in das entstehende Harz eingebunden ist.

Diese Vorgehensweise führt zu einem Endprodukt E, das im wesentlichen ein festes Harz mit einem eingebundenen Farbstoff ist und in einem Behälter oder Transportmittel gesammelt wird. Das Endprodukt E wird anschließend einer weiteren Bearbeitungsstation 4 zugeführt, in der die Zerkleinerung des Endproduktes auf Pigmentgröße erfolgt. Hierbei wird vorzugsweise eine Mühle verwendet, mit deren Hilfe sich die gewünschte Pigmentgröße einstellen läßt.

Bei den zur Verwendung geeigneten Farbstoffen bestehen im Prinzip keinerlei Einschränkungen, so daß für die Herstellung der Pigmente eine große Palette von Farbstoffen einsetzbar ist. Beispielsweise lassen sich zur Herstellung von fluoreszierenden Pigmenten Fluoreszenzfarbstoffe verwenden, wobei insbesondere Chelate aus der Gruppe der seltenen Erden eingesetzt werden können. Jedoch auch andere Funktionsfarbstoffe, wie beispielsweise Tagesleuchtfarbstoffe, thermochrome oder fotochrome Farbstoffe sowie infrarotabsorbierende oder -fluoreszierende Farbstoffe können einzeln oder in Kombination miteinander verwendet werden. Farbstoffe, die eine oder mehrere Wellenlängen aus dem sichtbaren Spektralbereich absorbieren, sind ebenso verwendbar wie Reagenzfarbstoffe, die unter bestimmten Voraussetzungen, wie etwa dem Einfluß einer bestimmten Strahlung oder der Anwesenheit anderer Reagenzien, eine ihrer Eigenschaften verändern.

Das Endprodukt E muß zumindest nach dem Abkühlen eine Sprödigkeit aufweisen, welche so groß ist, daß das Mahlen in der Zerkleinerungseinheit 4 zur erforderlichen Pigmentfeinheit erfolgen kann. Somit lassen sich durch die Variation der Ausgangsstoffe sowie der Reaktionsparameter in der Einheit 2 die Eigenschaften des Endproduktes E soweit beeinflussen, daß jeweils ein optimales Ergebnis für den jeweils speziellen Anwendungsfall erzielt werden kann.

Diese Pigmentpartikel können dann anschließend in der gewünschten Konzentration einem Bindemittel zugegeben werden, so daß vielfältig verwendbare Druckfarben entstehen.

Neben vielen anderen Anwendungsmöglichkeiten können insbesondere auch die fluoreszierenden Pigmente in Druckfarben verwendet werden, die in sicherheitstechnisch relevanten Anwendungsbereichen eingesetzt werden. Dabei werden Datenträger, wie Sicherheitsdokumente, Wertpapiere, Banknoten, Ausweiskarten oder sicherheitstechnisch relevante Karten, mit diesen Druckfarben bedruckt, um eine Kennzeichnung oder Absicherung derartiger Dokumente zu erreichen.

Eine derartig hergestellte Druckfarbe kann jedoch auch in anderen Bereichen eingesetzt werden, um Datenträger mit einer Echtheitskennzeichnung zu versehen. So lassen sich beispielsweise Verpackungen von besonders hochwertigen Produkten oder diese Produkte selbst mit Hilfe der erfindungsgemäßen Druckfarbe kennzeichen, so daß eine Echtheit jederzeit nachweisbar ist. Die Kennzeichnung der Produkte kann in vielen Fällen vorteilhaft sein, insbesondere in den Bereichen, in denen eine Nachahmung der Produkte oder Produktpiraterie bereits mit einfachen Mitteln möglich ist. Zu den bekannten Beispielen zählen hier etwa die Kennzeichnung der Verpackung von EDV-Programmen, Disketten, CDs oder anderen hochwertigen Verkaufsprodukten.

Im folgenden soll anhand einiger Beispiele das erfindungsgemäße Verfahren sowie das erfindungsgemäße Farbpigment weiter erläutert werden.

### Beispiel 1:

### Ausgangsstoffe:

| | | |
|---|---|---|
| 62,75 | Massen% | oligomerisiertes Diisocyanat |
| 9,89 | Massen% | Melamin |
| 12,36 | Massen% | p-Toluolsulfonamid |
| 15,00 | Massen% | CD331-Fluoreszenzfarbstoff |

Die genannten Komponenten werden als Pulvergemisch einem Extruder über eine Dosiereinrichtung zugegeben. Die Synthese erfolgt durch Reaktionsextrusion bei einer Extrudertemperatur von 220 °C.

### Beispiel 2:

### Ausgangsstoffe:

| | | |
|---|---|---|
| 56,37 | Massen% | trimerisiertes Diisocyanat |
| 10,07 | Massen% | Melamin |
| 18,56 | Massen% | Benzamid |
| 15,00 | Massen% | CD331-Fluoreszenzfarbstoff |

Die Komponenten werden als Pulvergemisch einem Extruder über eine Dosiereinrichtung zugegeben. Die Synthese erfolgt durch Reaktionsextrusion bei einer Extrudertemperatur von 210 °C.

### Beispiel 3:

### Ausgangsstoffe:

| | | |
|---|---|---|
| 62,78 | Massen% | trimerisiertes Diisocyanat |
| 11,21 | Massen% | Melamin |
| 20,67 | Massen% | Benzamid |
| 5,34 | Massen% | Uvitex OB-Fluoreszenzfarbstoff |

Die Komponenten werden als Pulvergemisch einem Extruder über eine Dosiereinrichtung zugegeben. Die Synthese erfolgt durch Reaktionsextrusion bei einer Extrudertemperatur von 210 °C.

### Beispiel 4:

### Ausgangsstoffe:

| | | |
|---|---|---|
| 60,60 | Massen% | trimerisiertes Diisocyanat |
| 10,84 | Massen% | Melamin |
| 9,56 | Massen% | Benzamid |
| 4,00 | Massen% | Harnstoff |
| 15,00 | Massen% | CD335-Fluoreszenzfarbstoff |

Die Komponenten werden als Pulvergemisch einem Extruder über eine Dosiereinrichtung zugegeben. Die Synthese erfolgt durch Reaktionsextrusion bei einer Extrudertemperatur von 260 °C.

Bei den obengenannten Beispielen läßt sich auch der Farbstoffgehalt variieren, so daß Fluoreszenzpigmente mit einem Farbstoffgehalt F mit 0 < F ≤ 50 % hergestellt werden können. Das aus den Beispielen jeweils resultierende Syntheseprodukt kann als Druckpigment eingesetzt werden.

## Patentansprüche

1. Verfahren zur Herstellung eines Pigments, das einen Farbstoff und ein festes Harz aufweist, wobei der Farbstoff in dem festen Harz eingebunden ist, dadurch **gekennzeichnet**, daß
- der Farbstoff mit mindestens einem pulverförmigen oligomerisierten Polyisocyanat und einer pulverförmigen mehrfunktionellen, wasserstoffaktiven Verbindung in einem Hochleistungsmischer vermischt und das Gemenge in einem Extruder unter Anwendung von Temperatur zu einem festen Harz umgesetzt wird,
- das Harz in einem weiteren Verfahrensschritt in einer Zerkleinerungseinheit auf die gewünschte Pigmentgröße zerkleinert wird.

2. Verfahren nach Anspruch 1, dadurch **gekennzeichnet**, daß beim Vermischen zusätzlich ein Kettenstopper, insbesondere eine einfunktionelle, wasserstoffaktive Verbindung, zugegeben wird.

3. Verfahren nach Anspruch 1 oder 2, dadurch **gekennzeichnet,** daß der Extruder mehrere Heizzonen aufweist.

4. Verfahren nach einem der Ansprüche 1 bis 3, dadurch **gekennzeichnet,** daß als Zerkleinerungseinheit eine Mühle verwendet wird.

5. Verfahren nach einem der Ansprüche 1 bis 4, dadurch **gekennzeichnet,** daß als Farbstoff ein Fluoreszenzfarbstoff aus der Gruppe der seltenen Erdchelate verwendet wird.

6. Verfahren nach einem der Ansprüche 1 bis 4, dadurch **gekennzeichnet,** daß der Farbstoff ein Tagesleuchtfarbstoff, ein thermochromer oder fotochromer Farbstoff, ein im Infraroten absorbierender oder fluoreszierender Farbstoff und/oder ein anderer Funktionsfarbstoff ist.

7. Verfahren nach einem der Ansprüche 1 bis 4, dadurch **gekennzeichnet,** daß der Farbstoff wenigstens eine Wellenlänge des sichtbaren Spektralbereichs absorbiert.

8. Verfahren nach einem der Ansprüche 1 bis 4, dadurch **gekennzeichnet,** daß der Farbstoff ein Reagenzfarbstoff ist.

## Claims

1. A method for producing a pigment having a dye and a solid resin, the dye being bound in the solid resin, characterized in that
- the dye is mixed with at least a powdery oligomerized polyisocyanate and a powdery polyfunctional, hydrogen-active compound in a heavy-duty mixer and the mixture is reacted into a solid resin in an extruder applying temperature,
- the resin is comminuted to the desired pigment size in a comminuting unit in a further method step.

2. A method according to claim 1, characterized in that a chain stopper, in particular a monofunctional, hydrogen-active compound, is added during mixing.

3. A method according to claim 1 or 2, characterized in that the extruder has a plurality of heating zones.

4. A method according to any of claims 1 to 3, characterized in that the comminuting unit used is a mill.

5. A method according to any of claims 1 to 4, characterized in that the dye used is a fluorescent dye selected from the group of rare earth chelates.

6. A method according to any of claims 1 to 4, characterized in that the dye is a daylight luminous dye, a thermochromic or photochromic dye, an infrared-absorbent or infrared-fluorescent dye and/or another functional dye.

7. A method according to any of claims 1 to 4, characterized in that the dye absorbs at least one wavelength of the visible spectral region.

8. A method according to any of claims 1 to 4, characterized in that the dye is a reagent dye.

## Revendications

1. Procédé de fabrication d'un pigment, qui comporte une matière colorante et une résine dure, la matière colorante étant incorporée dans la résine dure, caractérisé en ce que :
- la matière colorante est mélangée dans un mélangeur à grande puissance avec au moins un polyisocyanate pulvérulent oligomérisé et un composé pulvérulent, multi-fonctionnel, à hydrogène actif, et le mélange est transformé dans un extrudeur en utilisant l'action de la température, en une résine dure ;
- la résine est broyée au cours d'une autre étape de procédé, dans une unité de broyage, à la taille de pigment souhaitée.

2. Procédé selon la revendication 1, caractérisé en ce qu'au cours du mélange, on ajoute en outre un élément d'arrêt de chaîne, en particulier une combinaison unifonctionnelle, active à l'hydrogène.

3. Procédé selon la revendication 1 ou 2, caractérisé en ce que l'extrudeur comporte plusieurs zones de chauffage.

4. Procédé selon l'une des revendications 1 à 3, caractérisé en ce qu'on utilise comme unité de broyage un broyeur à meule.

5. Procédé selon l'une des revendications 1 à 4, caractérisé en ce qu'on utilise comme matière colorante une matière colorante fluorescente du groupe des chélates des terres rares.

6. Procédé selon l'une des revendications 1 à 4, caractérisé en ce que la matière colorante est une matière colorante lumière du jour, une matière colorante thermo-chrome ou photo-chrome, une matière colorante absorbante dans l'infrarouge ou fluorescente et/ou une autre matière colorante fonctionnelle.

7. Procédé selon l'une des revendications 1 à 4, caractérisé en ce que la matière colorante absorbe au moins une longueur d'onde de la zone spectrale visible.

8. Procédé selon l'une des revendications 1 à 4, caractérisé en ce que la matière colorante est une matière colorante réactive.
